# EUROPEAN PATENT APPLICATION

(11) **EP 2 952 383 A1**
(43) Date of publication of application: **09.12.2015**
(21) Application number: 14003747.4
(22) Date of filing: 06.11.2014
(51) Int. Cl.: B60Q 1/04, F21S 8/10, F21V 29/60, F21V 29/76

(54) **Vehicular lighting device**

(30) Priority: 06.06.2014 TW 103210034
(71) Applicant: T.Y.C. Brother Industrial Co., Ltd, Tainan City 702 (TW)
(72) Inventor: Hwang, Ching-Hsien, 708 Tainan City (TW); Cheng, Yung-Tien, 708 Tainan City (TW); Chen, Yu-Huan, 702 Tainan City (TW)
(74) Representative: Zeitler Volpert Kandlbinder Patent- und Rechtsanwälte Partnerschaft mbB

(57) **Abstract**

A vehicular lighting device (100) includes a first lighting unit (1), a second lighting unit (2) connected to the first lighting unit (1), a heat dissipating member (4, 5) disposed on at least one of the first and second housings (11, 21) and having a plurality of heat dissipating fins (42), and a heat dissipating channel (3) formed between the first and second housings (11, 21) and having an air inlet (33) located at a front side of the vehicular lighting device (100) for communicating with ambient air, and an air outlet (34) located at a rear side of the vehicular lighting device (100).

## Description

The invention relates to a lighting device, more particularly to a lighting device which can be used as a headlight of a vehicle.

A conventional headlight device of a vehicle mainly includes a lamp housing, and a plurality of light- emitting members, a heat dissipating member and at least one guide plate all disposed in the lamp housing. The heat dissipating member includes a plurality of heat dissipating fins for dissipating heat generated by the light-emitting members. The lamp housing has an opening provided in a mounting position of the guide plate, so that ambient air can enter the lamp housing via the opening. The ambient air is then guided by the guide plate to the heat dissipating member, so that heat generated by the heat dissipating member can be taken away by the ambient air. However, the lamp housing must provide a definite space for mounting of the guide plate, so that the volume of the entire lamp housing is increased. Further, the provision of the guide plate also increases the cost of the entire headlight device.

Therefore, the object of the present invention is to provide a vehicular lighting device that has a novel structure, that has a reduced cost, and that can save component mounting space.

Accordingly, a vehicular lighting device of the present invention comprises a first lighting unit, a second lighting unit, a heat dissipating member and a heat dissipating channel. The first lighting unit includes a first housing defining a first space, and a first light-emitting member disposed in the first space. The second lighting unit is connected to the first lighting unit, and includes a second housing defining a second space, and a second light-emitting member disposed in the second space. The heat dissipating member is disposed on at least one of the first and second housings, and includes a plurality of heat dissipating fins. The heat dissipating channel is formed between the first and second housings, and has an air inlet located at a front side of the vehicular lighting device for communicating with ambient air, and an air outlet located at a rear side of the vehicular lighting device.

Other features and advantages of the present invention will become apparent in the following detailed description of the embodiment with reference to the accompanying drawings, of which:
Fig. 1 is a front perspective view of a vehicular lighting device according to the embodiment of this invention;
Fig. 2 is an exploded perspective view of the embodiment;
Fig. 3 is a schematic front view of the embodiment;
Fig. 4 is a sectional side view of the embodiment; and
Fig. 5 is a rear perspective view of the embodiment.

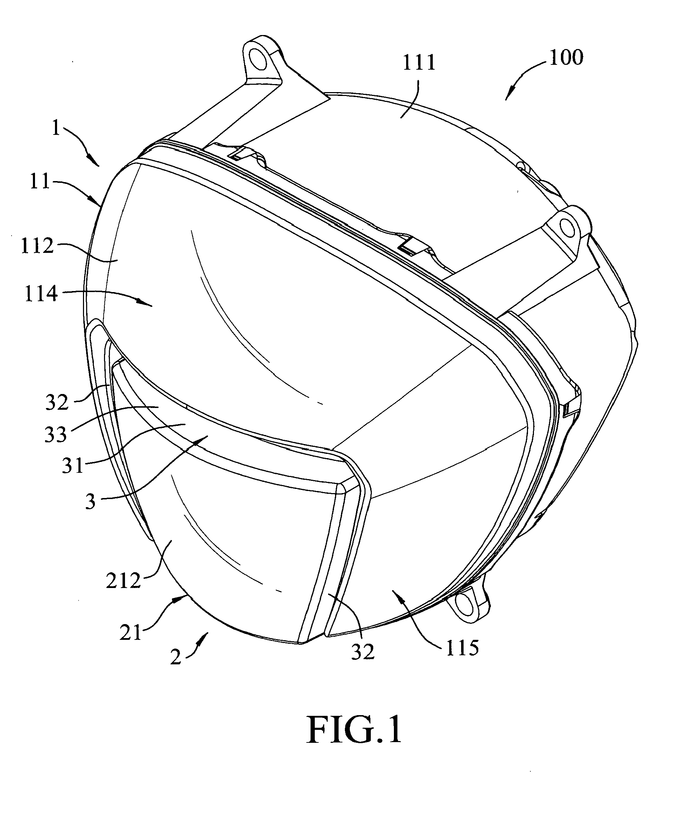

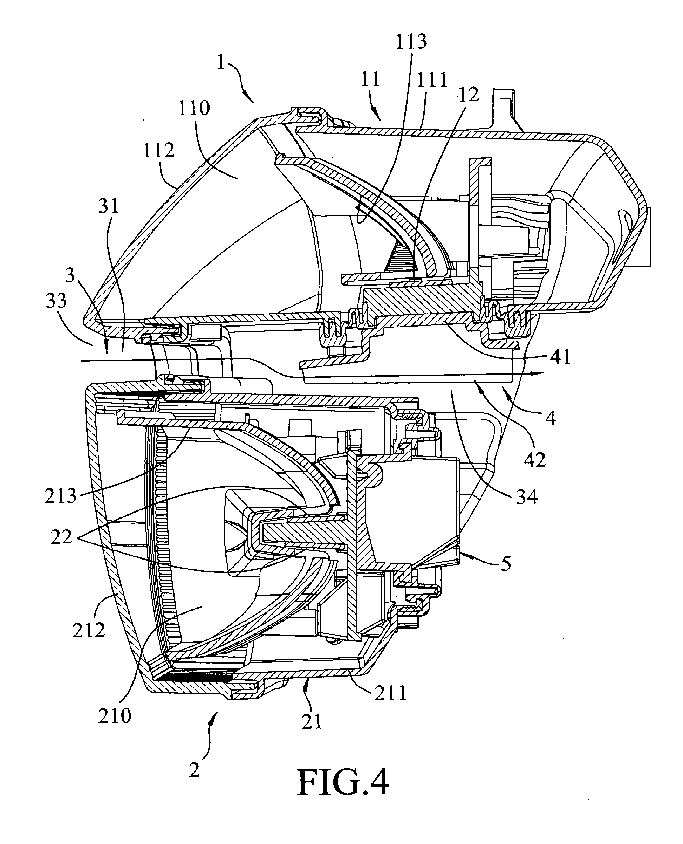

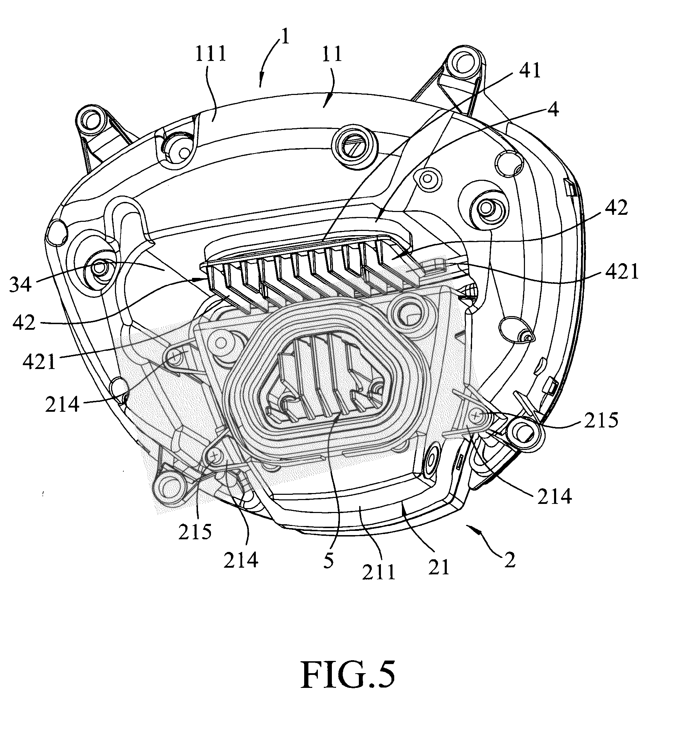

Referring to Figs. 1 to 5, a vehicular lighting device 100 according to the embodiment of the present invention can be used as a headlight of a vehicle, and is shown to comprise a first lighting unit 1, a second lighting unit 2, a heat dissipating channel 3, and a heat dissipating member 4.

The first lighting unit 1 is equivalent to a low beam headlight of the vehicle, and includes a first housing 11 defining a first space 110, and a plurality of first light-emitting members 12 disposed in the first space 110.

The first housing 11 includes a first housing portion 111, and a first light-transmitting cover portion 112 assembled on a front side of the first housing portion 111 and covering the first space 110. The first housing portion 111 has a first reflective surface 113 facing the first space 110 and following the shape of the first housing portion 111. Each portion of the first reflective surface 113 has an appropriate curvature. Light emitted from the first light-emitting members 12 is reflected by the first reflective surface 113 to pass forward through the first light-transmitting cover portion 112. After the first housing portion 111 and the first light-transmitting cover portion 112 are assembled together, the first housing 11 includes an upper housing section 114, and two lateral housing sections 115 extending downwardly and respectively from left and right sides of the upper housing section 114. Each of the lateral housing sections 115 has two first screw- connecting portions 116 spaced apart in a top-bottom direction. The first space 110 extends from the upper housing section 114 to the lateral housing sections 115.

The first light-emitting members 12 may be light-emitting diodes (LED), and are spacedly disposed in the upper housing section 114. The first light-emitting members 12 emit light upwardly. The emitted light is then reflected outwardly and forwardly by the first reflective surface 113.

The second lighting unit 2 is equivalent to a high beam headlight of the vehicle in this embodiment, and is assembled on a bottom side of the first lighting unit 1. Concretely speaking, the second lighting unit 2 is disposed below the upper housing section 114 and is positioned between the lateral housing sections 115. The second lighting unit 2 includes a second housing 21 defining a second space 210, and a plurality of second light-emitting members 22 disposed in the second space 210. The second space 210 and the first space 110 do not directly communicate with each other, but are spaced by the first and second housings 11, 21.

The second housing 21 includes a second housing portion 211, and a second light-transmitting cover portion 212 assembled on a front side of the second housing portion 211 and covering the second space 210. The second housing portion 211 has a second reflective surface 213 facing the second space 210. Each portion of the second reflective surface 213 has an appropriate curvature. Light emitted from the second light-emitting members 22 is reflected by the second reflective surface 213 to pass forward through the second light- transmitting cover portion 212. The second housing 21 further includes four screw-connecting portions 214. Two of the screw-connecting portions 214 are disposed on a left side of the second housing 21 and are spaced apart in the top-bottom direction. The other two screw-connecting portions 214 are disposed on a right side of the second housing 21, and are also spaced apart in the top-bottom direction. The second screw- connecting portions 214 are respectively connected to the first screw-connecting portions 116 using a plurality of screws 215, thereby fixedly assembling the second lighting unit 2 to the first lighting unit 1.

The second light-emitting members 22 may be light-emitting diodes (LED). Some of the light-emitting members 22 are spacedly disposed in the second housing 21 such that they emit light upwardly. The other light- emitting members 22 are spacedly disposed in the second housing 21 such that they emit light downwardly. Light emitted from all of the second light-emitting members 22 can be reflected outwardly and forwardly by the second reflective surface 213.

With reference to Figs. 1, 3 and 4, the heat dissipating channel 3 is formed between and defined by the first and second housings 11, 21, and includes a first channel portion 31 and two channel portions 32 extending downwardly and respectively from left and right sides of the first channel portion 31. The first channel portion 31 is formed between a bottom side of the upper housing section 114 and an upper side of the second housing 21. Each of the second channel portions 32 is formed between a respective one of the lateral housing sections 115 and a corresponding lateral side of the second housing 21. The first and second channel portions 31, 32 cooperatively define an air inlet 33 located at a front side of the lighting device 100 for communicating with ambient air, and an air outlet 34 located at a rear side of the lighting device 100.

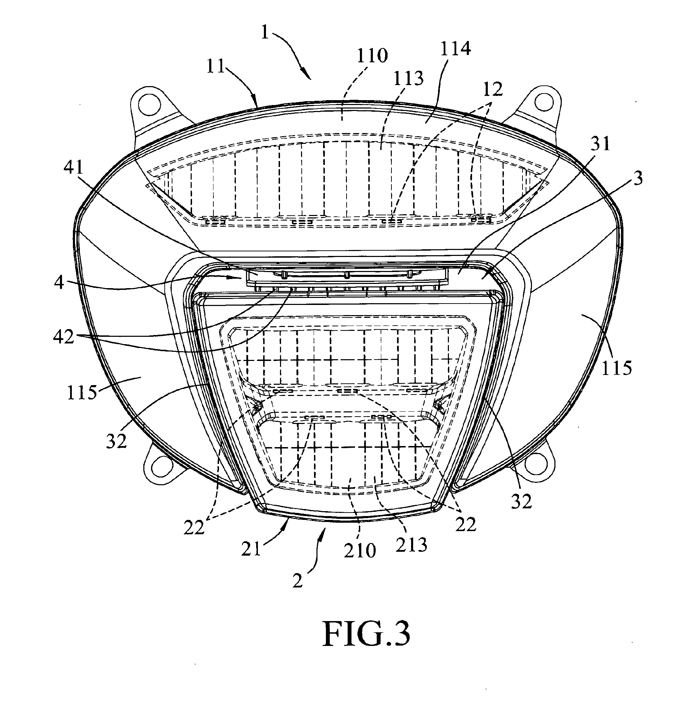

With reference to Figs. 3 to 5, the heat dissipating member 4 dissipates heat generated by the first and second lighting units 1, 2 during operation thereof. In this embodiment, the heat dissipating member 4 includes a base wall 41 connected to the bottom side of the first lighting unit 1 in proximity to a rear end thereof, and a plurality of spaced-apart heat dissipating fins 42 extending downward from the base wall 41. The heat dissipating member 4 is located on the first channel portion 31. The surface of each heat dissipating fin 42 is coated with a heat dissipation coating layer 421. The heat dissipation coating layer 421 is made of graphene which has a high thermal conductivity property. The thermal conductivity of the graphene is about 5300 W/mK. Through the high thermal conductive heat dissipation coating layer 421, the heat dissipation efficiency of the heat dissipating member 4 can be enhanced. As such, even if the size of the heat dissipating member 4 is reduced, the heat dissipating member 4 can similarly achieve a good heat dissipation effect. Because the size of the heat dissipating member 4 can be reduced, this can contribute to light weight and minimizing the volume of the entire lighting device 100. The heat dissipating member 4 is not limited to being connected to the first lighting unit 1, but may also be connected to the second lighting unit 2.

In this embodiment, the second lighting unit 2 is connected with another heat dissipating member 5. Since the first and second lighting units 1, 2 are respectively provided with the heat dissipating members 4, 5, a more efficient heat dissipation effect may be achieved.

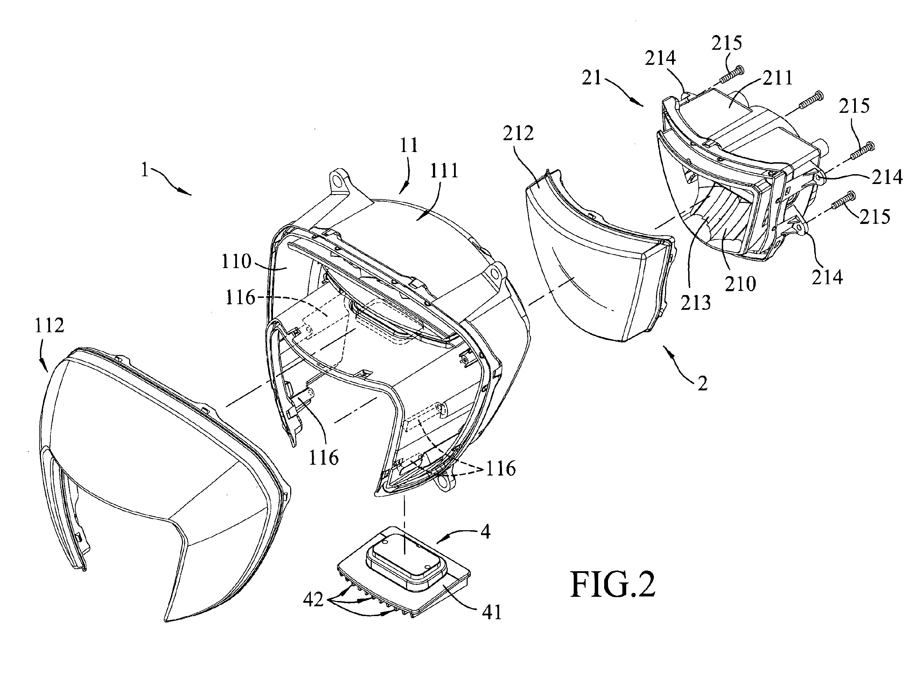

Referring back to Figs. 2 to 4, during assembly, the first lighting unit 1 is first connected with the heat dissipating member 4, after which the second lighting unit 2 is disposed below the first lighting unit 1, and the second screw-connecting portions 214 are fixed to the respective first screw-connecting portions 116, thereby fixedly interconnecting the first and second lighting units 1, 2. After assembly, since the bottom, left and right sides of the first lighting unit 1 are respectively spaced apart from a top, left and right sides of the second lighting unit 2, the heat dissipating channel 3 is formed between and defined by the first and second lighting units 1, 2. When the vehicle moves forward, oncoming airflow enters the heat dissipating channel 3 via the air inlet 33, passes through the heat dissipating member 4, and out of the air outlet 34. By using the ambient air to flow through the heat dissipating member 4, heat dissipation effect can be enhanced. Thus, the heat dissipating channel 3 on one hand serves to dissipate heat, while on the other hand serves to permit heat exchange between the heat dissipating member 4 and the ambient air. Further, the heat dissipating member 5 on the second lighting unit 2 can be similarly guided by the air flow to enhance heat dissipation effect thereof.

In summary, because the first and second lighting units 1, 2 are independent, after they are assembled, the heat dissipating channel 3 is formed therebetween. The heat dissipating channel 3 has a heat dissipation and flow guide effects, and uses the ambient air to assist the heat dissipating member 4 in dissipating heat. Since there is no need for provision of guide plates in this embodiment, the cost of the guide plates and the mounting space thereof can be saved. Therefore, the lighting device 100 of this invention has a novel structure, less components, and low cost, and can save component mounting space.

## Claims

1. A vehicular lighting device (100) comprising:
a first lighting unit (1) including a first housing (11) defining a first space (110), and a first light-emitting member (12) disposed in said first space (110);
a second lighting unit (2) connected to said first lighting unit (1) and including a second housing (21) defining a second space (210), and a second light-emitting member (22) disposed in said second space (210);
a heat dissipating member (4, 5) disposed on at least one of said first and second housings (11, 21) and including a plurality of heat dissipating fins (42); and
a heat dissipating channel (3) formed between said first and second housings (11, 21) and having an air inlet (33) located at a front side of said vehicular lighting device (100) for communicating with ambient air, and an air outlet (34) located at a rear side of said vehicular lighting device (100).

2. The vehicular lighting device (100) of Claim 1, wherein said first and second lighting units (1, 2) are disposed in a top-bottom direction.

3. The vehicular lighting device (100) of Claim 2, wherein said first housing (11) includes an upper housing section (114) disposed above said second lighting unit (2), and two lateral housing sections (115) extending downwardly and respectively from left and right sides of said upper housing section (114), said second lighting unit (2) being positioned between said lateral housing sections (115), said heat dissipating channel (3) including a first channel portion (31) formed between said upper housing section (114) and said second housing (21), said heat dissipating member (4) being connected to a bottom side of said upper housing section (114) and being located on said first channel portion (31).

4. The vehicular lighting device (100) of Claim 3, wherein said heat dissipating channel (3) further includes two second channel portions (32) extending downwardly and respectively from left and right sides of said first channel portion (31), each of said second channel portions (32) being formed between said second housing (21) and a corresponding one of said lateral housing sections (115).

5. The vehicular lighting device (100) of Claim 3, wherein each of said lateral housing sections (115) has a first screw-connecting portion (116), said second housing (21) including two second screw- connecting portions (214) respectively provided on left and right sides of said second housing (21) and respectively connected to said first screw- connecting portions (116) of said lateral housing sections (115).

6. The vehicular lighting device (100) of Claim 1, wherein the surface of each of said heat dissipating fins (42) is coated with a heat dissipation coating layer (421) which is made of graphene.

7. The vehicular lighting device (100) of Claim 1, wherein said first housing (11) includes a first housing portion (111), and a first light- transmitting cover portion (112) assembled on a front side of said first housing portion (111) and covering said first space (110), said first housing portion (111) having a first reflective surface (113) facing said first space (110), said first light-emitting member (12) emitting light that is reflected by said first reflective surface (113) to pass through said first light-transmitting cover portion (112), said second housing (21) including a second housing portion (211), and a second light-transmitting cover portion (212) assembled on a front side of said second housing portion (211) and covering said second space (210), said second housing portion (211) having a second reflective surface (213) facing said second space (210), said second light-emitting member (22) emitting light that is reflected by said second reflective surface (213) to pass through said second light-transmitting cover portion (212).

8. The vehicular lighting device (100) of Claim 2, wherein said first lighting unit (1) is a low beam headlight, and said second lighting unit (2) is a high beam headlight.
